# EUROPÄISCHE PATENTSCHRIFT

(11) **EP 3 571 096 B1**
(45) Veröffentlichungstag und Bekanntmachung des Hinweises auf die Patenterteilung: **08.04.2020**
(21) Anmeldenummer: 19700765.1
(22) Anmeldetag: 04.01.2019
(51) Int. Cl.: B60R 13/10

(54) **VERFAHREN UND ANZEIGESYSTEM ZUM ANZEIGEN VON AUSGABEDATEN**
METHOD AND DISPLAY SYSTEM FOR DISPLAYING OUTPUT DATA
PROCÉDÉ ET DISPOSITIF POUR L'AFFICHAGE DE DONNÉES DE SORTIE

(30) Priorität: 17.01.2018 DE 102018200669
(43) Veröffentlichungstag der Anmeldung: 27.11.2019
(73) Patentinhaber: Audi AG, 85045 Ingolstadt (DE)
(72) Erfinder: ROTH, Andreas, 85110 Kipfenberg/Böhming (DE)
(86) Internationale Anmeldenummer: PCT/EP2019/050131
(87) Internationale Veröffentlichungsnummer: WO 2019/141523

(56) Entgegenhaltungen:
- DE-A1-102009 048 680
- DE-A1-102016 001 191
- DE-U1-202010 006 825

## Beschreibung

Die Erfindung betrifft ein Verfahren zum Anzeigen von Ausgabedaten. Die Erfindung betrifft auch ein Anzeigesystem zum Anzeigen von Ausgabedaten, welches nach dem erfindungsgemäßen Verfahren betreibbar ist.

Aus dem allgemeinen Stand der Technik ist es bekannt, dass mittels einer Anzeigeeinrichtung Informationen in einem Kraftfahrzeug, beispielsweise in Form einer Navigationskarte, für einen Fahrer und außerhalb des Kraftfahrzeugs, beispielsweise in Form eines Taxischildes, für weitere Verkehrsteilnehmer angezeigt werden.

So beschreibt beispielsweise die DE 10 2016 001 191 A1 eine Anzeigevorrichtung für ein Kraftfahrzeug zum Anzeigen von Bildinhalten. Hierbei weist die Anzeigevorrichtung eine Anzeigefläche zum Anzeigen einer Bildinformation und eine Steuereinrichtung auf, die ein Steuersignal zum Ansteuern der Anzeigefläche bereitstellt. Ferner ist mit der Anzeigefläche ein Ausweissymbol als Bildinformation darstellbar, wobei das Ausweissymbol in Abhängigkeit von dem Steuersignal dargestellt wird. Das Steuersignal enthält eine Information darüber, zu welchem Zeitpunkt das Ausweissymbol am Kraftfahrzeug von außen sichtbar sein soll.

Aus der DE 20 2010 006 825 U1 geht ein Kfz-Kennzeichenschild hervor. Das Kennzeichenschild weist wenigstens ein elektronisches Anzeigemittel zur Darstellung einer ein- oder mehrzeiligen Buchstaben- und/oder Zahlenkombination einer Kfz-Kennzeichennummer auf. Des Weiteren umfasst das Kennzeichenschild wenigstens eine Anzeigesteuereinheit, welche mit dem Anzeigemittel verbindbar ist, wobei die Darstellung der Schrift und des Layouts auf dem Anzeigemittel einem landesspezifischen Kfz-Kennzeichen entspricht.

Des Weiteren ist aus der DE 10 2008 059 147 A1 ein Kraftfahrzeug mit einem hybriden Antrieb bekannt, der eine erste Antriebseinheit und eine zweite emissionsärmere Antriebseinheit aufweist, wobei das Kraftfahrzeug im Fahrbetrieb in verschiedenen Betriebsarten des hybriden Antriebs mindestens entweder von der ersten Antriebseinheit oder von der zweiten, emissionsärmeren Antriebseinheit angetrieben werden kann. Des Weiteren weist das Kraftfahrzeug eine im Fahrbetrieb von außerhalb des Kraftfahrzeugs sichtbare Anzeigeeinrichtung zum Anzeigen der augenblicklichen Betriebsart des hybriden Antriebs auf.

Derartige Anzeigevorrichtungen sind besonders komplex aufgebaut und aufwendig zu betreiben. Ferner können solche Anzeigevorrichtungen nicht oder nur schwer angepasst oder aktualisiert werden, wenn deren Verwendungszweck einmal bestimmt ist.

Aufgabe der vorliegenden Erfindung ist es daher, ein Verfahren und ein Anzeigesystem zum Anzeigen von Ausgabedaten bereitzustellen, welches besonders einfach zu betreiben und besonders flexibel, insbesondere hinsichtlich einer Aktualisierung der Ausgabedaten, betreibbar ist.

Diese Aufgabe wird durch ein Verfahren zum Anzeigen von Ausgabedaten sowie durch ein zugehöriges Anzeigesystem mit den Merkmalen der unabhängigen Patentansprüche gelöst. Vorteilhafte Ausgestaltungen mit zweckmäßigen und nicht trivialen Weiterbildungen der Erfindung sind in den abhängigen Patentansprüchen angegeben.

Bei dem Verfahren zum Anzeigen von Ausgabedaten umfassen die Ausgabedaten kraftfahrzeugseitige Daten eines Kraftfahrzeugs, welche durch eine Plakette angezeigt werden. Mit anderen Worten kann die Plakette die kraftfahrzeugseitigen Daten der Ausgabedaten repräsentieren oder damit verknüpft sein. Mit "Plakette" ist insbesondere ein mit einer vorbestimmten Information versehenes Anzeigeelement gemeint. Zum Beispiel kann die Plakette in Form eines Schildes ausgebildet sein.

Die kraftfahrzeugseitigen Daten werden ferner durch eine farbliche Kennzeichnung der Plakette und Zulassungsdaten des Kraftfahrzeugs repräsentiert. Mit "farblicher Kennzeichnung" ist insbesondere eine Kennfarbe gemeint, welche die Plakette ausfüllt. Bevorzugt kann die Plakette die Farben rot oder grün oder gelb aufweisen. Mit "Zulassungsdaten" sind insbesondere Daten des Kraftfahrzeugs gemeint, mit welchen das Kraftfahrzeug zugelassen ist. Zum Beispiel können die Zulassungsdaten Daten umfassen, welche einem Fahrzeugschein des Kraftfahrzeugs hinterlegt sind.

Bei dem Verfahren wird eine Anzeigeeinrichtung zum Anzeigen oder Ausgeben der Ausgabedaten bereitgestellt. Die Anzeigeeinrichtung ist beispielsweise als E-Paper oder elektronisches Papier, insbesondere als LCD-Display, ausgebildet. Mittels der Anzeigeeinrichtung kann auf einer Anzeigefläche der Anzeigeeinrichtung die Plakette dargestellt oder eingeblendet werden.

In einem weiteren Verfahrensschritt werden die kraftfahrzeugseitigen Daten des Kraftfahrzeugs mittels einer Erfassungseinrichtung erfasst. Hierzu kann die Erfassungseinrichtung insbesondere ein oder mehrere Messgeräte und/oder ein oder mehrere Sensoren umfassen. Anschließend wird die farbliche Kennzeichnung der Plakette mittels einer Steuereinrichtung auf Basis der erfassten kraftfahrzeugseitigen Daten bestimmt. Hierzu kann die Erfassungseinrichtung dazu eingerichtet sein, die erfassten kraftfahrzeugseitigen Daten an die Steuereinrichtung zu übermitteln oder zu übertragen oder der Steuereinrichtung bereitzustellen. Die Steuereinrichtung kann daraufhin dazu eingerichtet sein, die erfassten kraftfahrzeugseitigen Daten auszuwerten und/oder zu analysieren. In Abhängigkeit von den erfassten kraftfahrzeugseitigen Daten kann die Steuereinrichtung dann eine farbliche Kennzeichnung der Plakette auswählen oder festlegen. Die Steuereinrichtung ist insbesondere dazu eingerichtet, auf Basis der kraftfahrzeugseitigen Daten die Plakette zu gestalten. Beispielsweise kann einer jeweiligen Farbe der farblichen Kennzeichnung ein vorbestimmtes Werteintervall hinterlegt sein. Je nachdem in welches Werteintervall die erfassten kraftfahrzeugseitigen Daten fallen, wird die dem Werteintervall zugeordnete Farbe bestimmt oder ausgewählt.

In einem darauffolgenden Verfahrensschritt wird eine Plakettenfläche der Plakette, welche die farbliche Kennzeichnung aufweist, auf einem Anzeigebereich einer Anzeigefläche der Anzeigeeinrichtung angezeigt. Hierzu können auf der Anzeigefläche der Anzeigeeinrichtung Pixel eingeblendet werden, welche die Plakette, also die Plakettenfläche, farblich zumindest teilweise, also vollständig oder teilweise, darstellen oder anzeigen oder ausfüllen. Die Plakette wird also insbesondere elektronisch angezeigt und ist insbesondere nicht als ein Aufkleber ausgebildet.

Anschließend wird zum Anzeigen der Zulassungsdaten an einem vorbestimmten Bereich der Plakettenfläche der Plakette ein Freigabesignal empfangen und die Anzeigeeinrichtung zum Anzeigen der Plakette, welche die farbliche Kennzeichnung und die Zulassungsdaten aufweist, angesteuert. Mit anderen Worten können die Zulassungsdaten erst angezeigt werden, wenn das Freigabesignal empfangen wurde. Zum Anzeigen der Zulassungsdaten kann die Steuereinrichtung die Zulassungsdaten erfassen oder empfangen oder die Zulassungsdaten können der Steuereinrichtung, insbesondere einem Speicher der Steuereinrichtung, bereits hinterlegt sein. Zusätzlich oder alternativ können die Zulassungsdaten auch zunächst durch die Erfassungseinrichtung erfasst werden. Die Zulassungsdaten können an dem vorbestimmten Bereich oder Ausschnitt der Plakettenfläche angezeigt oder eingeblendet werden. Das Anzeigen der Plakette, insbesondere der farblichen Kennzeichnung und der Zulassungsdaten, erfolgt bevorzugt automatisch.

Die Plakettenfläche kann zudem eine vorbestimmte Form, wie beispielsweise eine runde oder rechteckige oder ovale oder mehreckige Form, aufweisen. Beispielsweise können zunächst die Grundrisse der Plakette, wie beispielsweise die Form, mit einer neutralen Farbe, wie beispielsweise schwarz oder weiß, angezeigt werden. Bevorzugt kann zunächst eine Standardplakette angezeigt werden, welche nach der Erfassung der kraftfahrzeugseitigen Daten mit der farblichen Kennzeichnung und den Zulassungsdaten ausgefüllt wird.

Je nachdem, welche kraftfahrzeugseitigen Daten des Kraftfahrzeugs erfasst werden, kann die Plakette entsprechend ausgefüllt werden. Ferner kann durch die Plakette eine Standardplakette über eine Lebensdauer des Kraftfahrzeugs bereitgestellt werden, welche variabel und/oder prozesssicher steuerbar und/oder farblich anpassbar ist. Des Weiteren kann die Plakette bezüglich einer Änderung der kraftfahrzeugseitigen Daten angepasst werden. Durch die Bereitstellung der Anzeigeeinrichtung ergibt sich ein vereinfachtes Handling zum Anbringen einer Plakette. Ferner ergibt sich durch die automatische Anzeige der Plakette eine Zeit- und/oder Kosteneinsparung für den Nutzer oder Besitzer des Kraftfahrzeugs und zudem kann eine Doppelnutzung und/oder ein Missbrauch der Plakette durch die Verknüpfung der Anzeige der Plakette mit den erfassten kraftfahrzeugseitigen Daten reduziert werden.

Eine vorteilhafte Ausführungsform sieht vor, dass als kraftfahrzeugseitige Daten Emissionswerte des Kraftfahrzeugs erfasst werden, wobei sich die farbliche Kennzeichnung der Plakette in Abhängigkeit von den erfassten Emissionswerten des Kraftfahrzeugs unterscheidet. Mit anderen Worten können die kraftfahrzeugseitigen Daten erfasste Emissionswerte des Kraftfahrzeugs umfassen, welche die farbliche Kennzeichnung der Plakette bestimmen. Mit anderen Worten kann die Plakette eine andere Farbe aufweisen, je nachdem welche Emissionswerte erfasst werden. Bevorzugt werden als Emissionswerte des Kraftfahrzeugs Werte eines Schadstoff-Ausstoßes des Kraftfahrzeugs bestimmt. Besonders bevorzugt werden Werte von Stickoxiden, kurz NOx, besonders bevorzugt von Stickstoffdioxid, bestimmt. Bevorzugt ist die Plakette als Umweltplakette oder Feinstaubplakette ausgebildet. Zum Erfassen der Emissionswerte des Kraftfahrzeugs kann die Erfassungseinrichtung beispielsweise zumindest eine Lambdasonde aufweisen. Zusätzlich oder alternativ kann die Erfassungseinrichtung ein oder mehrere Messgeräte aufweisen, welche im Antriebsstrang, insbesondere am Motor und/oder am Getriebe des Kraftfahrzeugs, angeordnet sind, aufweisen. Dadurch können auf besonders einfache und zuverlässige Art und Weise Emissionswerte des Kraftfahrzeugs bestimmt werden.

Insbesondere unterscheidet sich die farbliche Kennzeichnung der Plakette in Abhängigkeit von den erfassten Emissionswerten des Kraftfahrzeugs. Die Emissionswerte können dabei Schadstoffklassen oder Schadstoffgruppen zugeordnet sein. Bevorzugt werden die Emissionswerte in drei Schadstoffklassen unterteilt. Jeder Schadstoffklasse ist bevorzugt eine vorbestimmte Farbe zugeordnet. Beispielsweise erhält die Plakette eine grüne Farbe, wenn die Emissionswerte in die Schadstoffklasse 4 fallen, eine gelbe Farbe, wenn die Emissionswerte in die Schadstoffklasse 3 fallen oder eine rote Farbe, wenn die Emissionswerte in die Schadstoffklasse 2 fallen.

In vorteilhafter Weise werden als Zulassungsdaten des Kraftfahrzeugs ein Kraftfahrzeugkennzeichen angezeigt. Die kraftfahrzeugseitigen Daten weisen also insbesondere die Zulassungsdaten, welche das Kraftfahrzeugkennzeichen umfassen, und Emissionswerte des Kraftfahrzeugs auf. Dabei werden insbesondere die Emissionswerte des Kraftfahrzeugs als eine farbliche Kennzeichnung der Plakette und das Kraftfahrzeugkennzeichen auf einem vorbestimmten Bereich der Plakettenfläche ausgegeben. Mit "Kraftfahrzeugkennzeichen" ist insbesondere ein amtliches Kennzeichen oder ein Nummernschild des Kraftfahrzeugs gemeint. Hierbei umfasst das Kraftfahrzeugkennzeichen insbesondere ein Unterscheidungszeichen, bevorzugt ein bis drei Buchstaben, zum Beispiel IN, und eine Erkennungsnummer, bevorzugt ein oder zwei Buchstaben und bis zu vier Ziffern, zum Beispiel XY 1234. Das Kraftfahrzeugkennzeichen wird dann bevorzugt auf dem vorbestimmten Bereich der Plakettenfläche der Plakette angezeigt oder eingeblendet.

Gemäß einer vorteilhaften Weiterbildung ist es vorgesehen, dass das Freigabesignal nach Eingabe eines Freigabecodes empfangen wird. Bevorzugt wird das Freigabesignal von einer Servereinrichtung, insbesondere einer fahrzeugexterne Servereinrichtung, auf die Eingabe des Freigabecodes hin ausgegeben. Bei der Servereinrichtung handelt es sich bevorzugt um eine Servereinrichtung einer Zulassungsstelle und/oder um eine Servereinrichtung eines technischen Überwachungsvereins, wie beispielsweise dem TÜV. Zusätzlich oder alternativ kann der Freigabecode von der Servereinrichtung ausgegeben oder bereitgestellt werden. Beispielsweise kann der Freigabecode einem portablen mobilen Endgerät des Besitzers des Kraftfahrzeugs übermittelt werden. Alternativ kann der Freigabecode dem Besitzer des Kraftfahrzeugs manuell oder auf Papier übergeben werden. Wird der Freigabecode dem Besitzer bereitgestellt, so kann dieser den Freigabecode beispielsweise in eine Eingabeeinrichtung des Kraftfahrzeugs eingeben oder eintippen. Daraufhin kann die Steuereinrichtung des Kraftfahrzeugs dazu eingerichtet sein, ein Signal an die Servereinrichtung auszugeben oder auszusenden, welche daraufhin dazu eingerichtet ist, den eingegebenen Freigabecode zu überprüfen. Stimmt der Freigabecode beispielsweise mit einem der Servereinrichtung hinterlegten Freigabecode, welche insbesondere dem Kraftfahrzeug zugeordnet ist, überein, so kann die Servereinrichtung das Freigabesignal ausgegeben.

Bei dem "Freigabecode" handelt es sich insbesondere um eine Zahlen- und/oder Buchstabenkombination. Bevorzugt ist der Freigabecode temporär begrenzt. Mit anderen Worten kann die Gültigkeit des Freigabecodes zeitlich beschränkt sein. Beispielsweise kann es vorgesehen sein, dass die Servereinrichtung dazu eingerichtet ist, bei Erstellung des Freigabecodes den Freigabecode nur für ein vorbestimmtes Zeitfenster zuzulassen. Entsprechend kann die Servereinrichtung bei der Ausgabe des Freigabecodes dazu eingerichtet sein, den Freigabecode und das dem Freigabecode zugeteilte Zeitfenster mitzuteilen. Durch die zeitliche Beschränkung des Freigabecodes kann einem Missbrauch oder einer Weitergabe vorgebeugt oder unterbunden werden. Dadurch kann eine Sicherheit beim Bereitstellen des Freigabecodes erhöht werden.

Zusätzlich können als kraftfahrzeugseitige Daten, insbesondere zum Anzeigen der Plakette, eine Fahrzeugidentifikationsnummer und/oder eine Fahrgestellnummer und/oder eine Emissionsschlüsselnummer und/oder eine Motorart, insbesondere Diesel oder Otto oder g-tron oder e-tron oder h-tron, und/oder eine Fahrzeugbauart und/oder eine Erstzulassung des Kraftfahrzeugs und/oder ein aktuelles Tagesdatum erfasst werden. Zusätzlich oder alternativ können die kraftfahrzeugseitigen Daten der Servereinrichtung, insbesondere zum Erhalten des Freigabecodes, übermittelt werden.

Erfindungsgemäss ist vorgesehen, dass bei einer Änderung der kraftfahrzeugseitigen Daten mittels einer Ausgabeeinrichtung ein Hinweis ausgegeben wird. Die Änderung der kraftfahrzeugseitigen Daten kann durch die Steuereinrichtung erfasst werden. Wird beispielsweise durch die Steuereinrichtung festgestellt, dass sich die Emissionswerte des Kraftfahrzeugs, welchen eine farbliche Kennzeichnung zugeordnet ist, derart ändern, dass sich die farbliche Kennzeichnung ändern würde, so kann die Steuereinrichtung dazu eingerichtet sein, die Ausgabeeinrichtung anzusteuern. Mit anderen Worten kann die Steuereinrichtung dazu eingerichtet sein, die Ausgabeeinrichtung derart anzusteuern, dass mittels der Ausgabeeinrichtung eine Information ausgegeben wird, welche auf eine Änderung der kraftfahrzeugseitigen Daten hinweist. Wird beispielsweise durch die Steuereinrichtung festgestellt, dass sich die Zulassungsdaten, wie beispielsweise das Kennzeichen des Kraftfahrzeugs, ändern, so kann die Steuereinrichtung dazu eingerichtet sein, die Ausgabeeinrichtung anzusteuern. Mit anderen Worten kann die Steuereinrichtung die Ausgabeeinrichtung bei einem Kennzeichenwechsel des Kraftfahrzeugs ansteuern. Beispielsweise kann die Ausgabeeinrichtung als eine Multimediaeinrichtung des Kraftfahrzeugs, welche beispielsweise einen Bildschirm oder ein Display oder einen Lautsprecher umfasst, ausgebildet sein. Beispielsweise kann mittels des Displays der Ausgabeeinrichtung ein Schriftzug eingeblendet werden. Dieser Schriftzug kann zum Beispiel "Änderung der Zulassungsdaten" oder "Plakette ungültig" anzeigen. Alternativ oder zusätzlich kann diese Information auch akustisch mittels des Lautsprechers ausgegeben werden. Damit erhält der Fahrer oder Besitzer des Kraftfahrzeugs besonders schnell und zuverlässig ein Statusupdate über eine Aktualität und Gültigkeit der angezeigten Plakette.

Bei Ausgabe des Hinweises kann beispielsweise ein Aktualisierungscode zum Aktualisieren der farblichen Kennzeichnung der Plakette und/oder der Zulassungsdaten angefordert werden. Bevorzugt kann die Steuereinrichtung des Kraftfahrzeugs dazu eingerichtet sein, bei erfasster Änderung der kraftfahrzeugseitigen Daten, insbesondere der Emissionswerte und/oder der Zulassungsdaten, eine Anfragemeldung an die Servereinrichtung auszugeben. Die Servereinrichtung kann daraufhin dazu eingerichtet sein, auf die Anfragemeldung hin den Aktualisierungscode, welcher bevorzugt zeitlich begrenzt ist, auszugeben oder an das Kraftfahrzeug zu übermitteln. Wie bei dem Freigabecode kann durch den Aktualisierungscode das Freigabesignal zum Anzeigen der neuen oder geänderten Zulassungsdaten genutzt werden. Dabei kann das Freigabesignal nach Eingabe des Aktualisierungscodes, insbesondere von der Servereinrichtung, empfangen werden. Die farbliche Kennzeichnung der Plakette und/oder die geänderten Zulassungsdaten können dann bevorzugt automatisch aktualisiert werden.

In vorteilhafter Weise umfassen die Ausgabedaten ferner zumindest eine Vignette und/oder ein Parkticket und/oder eine Parkuhr, wobei die Vignette und/oder das Parkticket und/oder die Parkuhr auf einem weiteren Anzeigebereich der Anzeigefläche der Anzeigeeinrichtung angezeigt werden. Mit anderen Worten kann neben der Plakette auf der Anzeigefläche der Anzeigeeinrichtung noch zumindest eine Vignette und/oder ein Parkticket und/oder eine Parkuhr eingeblendet werden. Mit "Vignette" ist insbesondere eine Gebührenmarke für die Benutzung vorbestimmter Straßen, insbesondere Autobahnen, in vorbestimmten Ländern, wie beispielsweise Schweiz oder Österreich, gemeint. Mit "Parkticket" ist insbesondere ein Parkschein gemeint. Mit "Parkuhr" ist insbesondere eine Parkscheibe gemeint. Hat beispielsweise der Fahrer des Kraftfahrzeugs eine Vignette oder ein Parkticket gekauft, so kann dem Fahrer, insbesondere einem mobilen Endgerät des Fahrers, oder der Ausgabeeinrichtung des Kraftfahrzeugs ein weiterer Freigabecode übermittelt oder bereitgestellt werden. Beispielsweise kann der weitere Freigabecode von einer weiteren Servereinrichtung bereitgestellt werden. Der Fahrer kann den weiteren Freigabecode in die Eingabeeinrichtung des Kraftfahrzeugs, insbesondere über eine Benutzerschnittstelle der Eingabeeinrichtung, eingeben, wobei die Eingabeeinrichtung mit der Steuereinrichtung gekoppelt ist. Die Eingabeeinrichtung ist beispielsweise als Touchscreen ausgebildet. Die Steuereinrichtung kann daraufhin die Anzeigeeinrichtung zum Anzeigen oder Einblenden der Vignette oder des Parktickets auf dem weiteren Anzeigebereich der Anzeigefläche ansteuern.

Gemäß einer vorteilhaften Weiterbildung wird eine aktuelle Position des Kraftfahrzeugs und/oder eine vorbestimmte Fahrroute erfasst, wobei in Abhängigkeit von der aktuellen Position des Kraftfahrzeugs und/oder einer vorbestimmten Fahrroute des Kraftfahrzeugs der weitere Freigabecode zum Anzeigen der Vignette angefragt wird, wobei die Vignette angezeigt wird, sobald der weitere Freigabecode empfangen oder über eine Benutzerschnittstelle eingegeben wird. Damit kann die Vignette auch automatisch in Abhängigkeit von einer aktuellen Position des Kraftfahrzeugs bereitgestellt werden. In Abhängigkeit von der aktuellen Position und/oder der vorbestimmten Fahrroute des Kraftfahrzeugs kann die Steuereinrichtung dazu eingerichtet sein, die Anzeigeeinrichtung zum Anzeigen der Vignette anzusteuern. Hierzu kann der Steuereinrichtung, insbesondere einem Speicher der Steuereinrichtung, eine oder mehrere Vignetten, welche den entsprechenden Ländern zugeordnet sind, hinterlegt sein. Zum Freischalten der entsprechenden Vignette kann die Steuereinrichtung dazu eingerichtet sein, den weiteren Freigabecode zu erfassen.

In vorteilhafter Weise wird das Freigabesignal und/oder der Freigabecode und/oder der weitere Freigabecode über eine Funkverbindung, insbesondere über eine Mobilfunk-Verbindung und/oder WLAN-Verbindung und/oder eine Bluetooth-Verbindung, übermittelt oder übertragen.

Zu der Erfindung gehört auch ein Anzeigesystem zum Anzeigen von Ausgabedaten, wobei die Ausgabedaten kraftfahrzeugseitige Daten eines Kraftfahrzeugs umfassen, welche durch eine Plakette anzeigbar sind, wobei die kraftfahrzeugseitigen Daten durch eine farbliche Kennzeichnung der Plakette und Zulassungsdaten des Kraftfahrzeugs repräsentiert sind. Das Anzeigesystem umfasst eine Anzeigeeinrichtung, welche dazu eingerichtet ist, die Ausgabedaten anzuzeigen. Des Weiteren weist das Anzeigesystem eine Erfassungseinrichtung auf, welche dazu eingerichtet ist, die kraftfahrzeugseitigen Daten des Kraftfahrzeugs zu erfassen. Ferner umfasst das Anzeigesystem eine Steuereinrichtung, welche dazu eingerichtet ist, auf Basis der erfassten kraftfahrzeugseitigen Daten die farbliche Kennzeichnung der Plakette zu bestimmen. Die Anzeigeeinrichtung ist ferner dazu eingerichtet, eine Plakettenfläche der Plakette auf einem Anzeigebereich einer Anzeigefläche der Anzeigeeinrichtung anzuzeigen, welche die farbliche Kennzeichnung aufweist. Des Weiteren ist die Steuereinrichtung ferner dazu eingerichtet, ein Freigabesignal zum Anzeigen der Zulassungsdaten an einem vorbestimmten Bereich der Plakettenfläche der Plakette zu empfangen und bei Empfangen des Freigabesignals die Anzeigeeinrichtung zum Anzeigen der Plakette, welche die farbliche Kennzeichnung und die Zulassungsdaten aufweist, anzusteuern.

Gemäß einer vorteilhaften Ausführungsform ist die Anzeigeeinrichtung an einem vorbestimmten Bereich einer Windschutzscheibe des Kraftfahrzeugs angeordnet. Zusätzlich oder alternativ kann die Anzeigeeinrichtung in ein Grundmaterial der Windschutzscheibe integriert oder eingebettet oder eingesetzt sein. Mit anderen Worten ist die Anzeigeeinrichtung in die Windschutzscheibe des Kraftfahrzeugs, insbesondere in ein Grundmaterial der Windschutzscheibe, integriert. Mit "Windschutzscheibe" ist insbesondere eine Frontscheibe des Kraftfahrzeugs gemeint. Bevorzugt ist die Anzeigefläche der Anzeigeeinrichtung auf eine Umgebung des Kraftfahrzeugs gerichtet. Mit anderen Worten kann die Anzeigefläche einem Außenbereich des Kraftfahrzeugs zugewandt sein. Die Anordnung oder Integration der Anzeigeeinrichtung an oder in die Windschutzscheibe des Kraftfahrzeugs hat den Vorteil, dass dadurch eine Störanfälligkeit reduziert und damit eine Robustheit zum Anzeigen der Ausgabedaten erhöht wird. Des Weiteren kann eine Lesbarkeit der Ausgabedaten durch die Anzeigeeinrichtung erhöht werden. Die Integration oder Einbettung der Anzeigeeinrichtung in das Grundmaterial der Windschutzscheibe hat ferner den Vorteil, dass die dem Innenraum des Kraftfahrzeug zugewandte Oberfläche der Windschutzscheibe glatt oder plan oder eben ausgebildet ist. Ferner kann dadurch die Windschutzscheibe besser und einfacher gereinigt werden. Durch die Anzeige der Ausgabedaten mittels der Anzeigeeinrichtung kann einem Diebstahl der Plakette vorgebeugt werden.

Bevorzugt kann es vorgesehen sein, dass das Anzeigesystem auch mehrere Anzeigeeinrichtungen aufweist. Mit anderen Worten kann ein Einsatz mehrerer Anzeigeeinrichtungen vorgesehen sein. Die mehreren Anzeigeeinrichtungen können an unterschiedlichen Bereichen der Windschutzscheibe angeordnet sein. Die Jeweiligen Anzeigeeinrichtungen können dabei analog zu der bereits beschriebenen Anzeigeeinrichtung ausgebildet sein. Die Positionierung der Anzeigeeinrichtung oder der mehreren Anzeigeeinrichtung kann, beispielsweise durch eine Gesetzeslage, vorgegeben oder vorgeschrieben sein.

In vorteilhafter Weise umfasst das Anzeigesystem ferner ein Heizelement, welches dazu eingerichtet ist, die Anzeigeeinrichtung zu beheizen. Beispielsweise kann das Heizelement als ein Heizdraht ausgebildet sein. Das Heizelement kann in einen Rahmen der Anzeigeeinrichtung integriert sein. Bevorzugt umgibt oder umrandet oder umrahmt der Rahmen die Anzeigefläche der Anzeigeeinrichtung. Durch das Heizelement kann sichergestellt werden, dass bei einer belegten oder bedeckten Windschutzscheibe, beispielsweise mit Eis oder Frost oder Kondensat, die Anzeigefläche freigemacht werden kann und damit eine Lesbarkeit oder Sichtbarkeit der Ausgabedaten gewährleistet ist.

Eine vorteilhafte Weiterbildung sieht vor, dass die Erfassungseinrichtung ferner dazu eingerichtet ist, eine Umgebungstemperatur in einer Umgebung des Kraftfahrzeugs zu erfassen, wobei die Steuereinrichtung dazu eingerichtet ist, das Heizelement zum Beheizen der Anzeigeeinrichtung erst anzusteuern, wenn ein erfasster Wert der Umgebungstemperatur unter einem vorbestimmten Schwellwert liegt. Die Erfassungseinrichtung kann beispielsweise ein Thermometer aufweisen, welches dazu eingerichtet ist, die Temperaturen in der Umgebung des Kraftfahrzeugs zu erfassen oder zu messen. Alternativ kann die Erfassungseinrichtung Temperaturdaten von einer Wetterstation empfangen. Der vorbestimmte Schwellwert kann zwischen -5°C und 5°C, bevorzugt 0°C, betragen. Sinken beispielsweise die Umgebungstemperaturen unter den Gefrierpunkt, so kann die Windschutzscheibe gefrieren, wodurch eine Lesbarkeit der Anzeigeeinrichtung behindert wird. Durch das Heizelement kann sichergestellt werden, dass die Anzeigeeinrichtung auch bei niedrigen Umgebungstemperaturen sichtbar bleibt.

Die Erfindung umfasst auch die Kombinationen der beschriebenen Ausführungsformen.

Zu der Erfindung gehören auch Weiterbildungen des erfindungsgemäßen Verfahrens und des erfindungsgemäßen Anzeigesystems, die Merkmale aufweisen, wie sie bereits im Zusammenhang mit den Weiterbildungen des erfindungsgemäßen Verfahrens oder des erfindungsgemäßen Anzeigesystems beschrieben worden sind. Aus diesem Grund sind die entsprechenden Weiterbildungen des erfindungsgemäßen Verfahrens oder des erfindungsgemäßen Anzeigesystems hier nicht noch einmal beschrieben.

Im Folgenden sind Ausführungsbeispiele der Erfindung beschrieben. Hierzu zeigt:
- Fig. 1: eine schematische Darstellung eines Verfahrens zum Anzeigen von Ausgabedaten in einem Ablaufdiagramm;
- Fig. 2: eine schematische Darstellung eines Anzeigesystems zum Anzeigen der Ausgabedaten und
- Fig. 3: eine schematische Darstellung einzelner Komponenten des Anzeigesystems.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

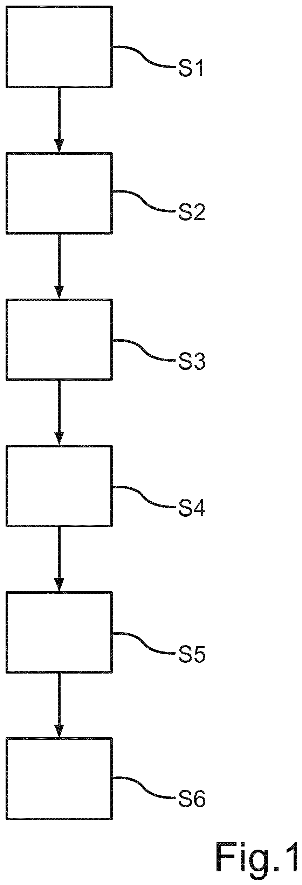

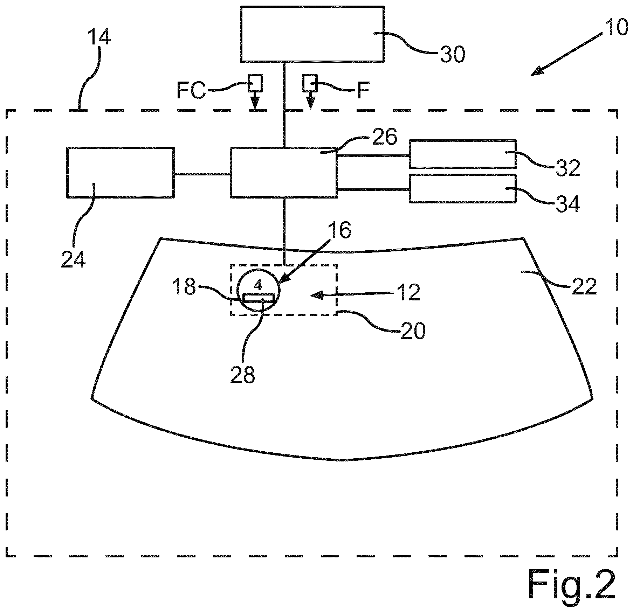

Im Zusammenhang mit Fig. 1 und Fig. 2 soll auf das Verfahren und das Anzeigesystem 10 zum Anzeigen von Ausgabedaten 12 genauer eingegangen werden.

Bei dem Verfahren zum Anzeigen von Ausgabedaten 12 umfassen die Ausgabedaten 12 kraftfahrzeugseitige Daten eines Kraftfahrzeugs 14. Das Kraftfahrzeug 14 ist bevorzugt als Kraftwagen, insbesondere Personenkraftwagen, ausgebildet. Die kraftfahrzeugseitigen Daten werden durch eine Plakette 16 angezeigt oder repräsentiert.

Wie aus Fig. 2 ersichtlich, weist die Plakette 16 eine vorbestimmte Form, insbesondere eine runde Form, auf. Mit "vorbestimmter Form" ist insbesondere eine Grundform der Plakette 16 gemeint. Mithilfe der Plakette 16 werden die kraftfahrzeugseitigen Daten verknüpft. Hierzu werden die kraftfahrzeugseitigen Daten durch eine farbliche Kennzeichnung der Plakette 16 sowie Zulassungsdaten des Kraftfahrzeugs 14 repräsentiert. Mit "farblicher Kennzeichnung" ist insbesondere gemeint, dass eine Plakettenfläche 18 der Plakette 16 mit einer Farbe zumindest teilweise, also vollständig oder teilweise, ausgefüllt wird. Mit anderen Worten kann die Plakette 16 eine vorbestimmte Farbe aufweisen. Die Zulassungsdaten des Kraftfahrzeugs 14 umfassen insbesondere ein Kennzeichen des Kraftfahrzeugs 14.

Bei dem Verfahren wird in einem ersten Verfahrensschritt S1 zunächst eine Anzeigeeinrichtung 20 zum Anzeigen oder Ausgeben der Ausgabedaten 12 bereitgestellt. Hierzu wird die Anzeigeeinrichtung 20 an einer Windschutzscheibe 22 des Kraftfahrzeugs 14 angeordnet. Bevorzugt wird die Anzeigeeinrichtung 20 in die Windschutzscheibe 22 des Kraftfahrzeugs 14 integriert. Dabei ist die Anzeigeeinrichtung 20 an einem vorbestimmten Bereich der Windschutzscheibe 22 des Kraftfahrzeugs 14 angeordnet. Die Anzeigeeinrichtung 20 kann beispielsweise als ein elektronisches Papier, insbesondere als LCD-Display (Liquid Cristal Display), ausgebildet sein. Die Anzeigeeinrichtung 20 ist dazu eingerichtet, die Plakette 16 durch Einblenden von Pixeln anzuzeigen.

Wird die Anzeigeeinrichtung 20 an der Windschutzscheibe 22 angeordnet, so kann die Plakette 16 zunächst als Standardplakette, insbesondere unbeschriftet und/oder ohne farbliche Kennzeichnung, auf der Anzeigeeinrichtung 20 angezeigt werden. In einem weiteren Verfahrensschritt S2 werden die kraftfahrzeugseitigen Daten des Kraftfahrzeugs 14 mittels einer Erfassungseinrichtung 24 erfasst. Dabei werden als die kraftfahrzeugseitigen Daten des Kraftfahrzeugs 14 Emissionswerte des Kraftfahrzeugs 14 und/oder die Zulassungsdaten des Kraftfahrzeugs 14 erfasst. Bevorzugt werden als Emissionswerte des Kraftfahrzeugs 14 Werte eines Schadstoff-Ausstoßes des Kraftfahrzeugs 14 bestimmt. Die Plakette 16 ist also insbesondere als eine Umweltplakette ausgebildet.

Werden die Emissionswerte durch die Erfassungseinrichtung 24 des Kraftfahrzeugs 14 erfasst, so kann eine Steuereinrichtung 26 des Kraftfahrzeugs dazu eingerichtet sein, die Emissionswerte einem vorbestimmten Werteintervall, beispielsweise einer Schadstoffklasse oder einer Schadstoffgruppe, zuzuordnen. Die farbliche Kennzeichnung der Plakette 16 unterscheidet sich in Abhängigkeit von dem den erfassten Emissionswerten des Kraftfahrzeugs 14 zugeordneten Werteintervall. Bevorzugt sind die Emissionswerte in drei Schadstoffklassen unterteilt. Jeder Schadstoffklasse ist bevorzugt eine vorbestimmte Farbe zugeordnet. Beispielsweise erhält die Plakette 16 eine grüne Farbe, wenn die Emissionswerte in die Schadstoffklasse 4 fallen, eine gelbe Farbe, wenn die Emissionswerte in die Schadstoffklasse 3 fallen, eine rote Farbe, wenn die Emissionswerte in die Schadstoffklasse 2 fallen. Zusätzlich zu der farblichen Kennzeichnung kann auch die Schadstoffklasse, insbesondere in Form einer Nummer oder Zahl, auf einem vorbestimmten Bereich der Plakettenfläche 18 angezeigt oder eingeblendet werden. Wie aus Fig. 2 ersichtlich, wurden die Emissionswerte des Kraftfahrzeugs 14 der Schadstoffklasse 4 zugeordnet.

In einem weiteren Verfahrensschritt S3 wird die farbliche Kennzeichnung der Plakette 16 mittels der Steuereinrichtung 26 auf Basis der erfassten kraftfahrzeugseitigen Daten bestimmt. Dabei wird den erfassten Emissionswerten die farbliche Kennzeichnung zugeordnet. Anschließend wird in einem darauffolgenden Verfahrensschritt S4 die Plakettenfläche 18 der Plakette 16, welche die farbliche Kennzeichnung aufweist, angezeigt. Wie aus Fig. 2 ersichtlich, weist die Plakette 16 des Kraftfahrzeugs 14 die Schadstoffklasse 4 auf. Mit der Schadstoffklasse 4 weist die Plakette 16 als farbliche Kennzeichnung grün auf. Zum Anzeigen der Zulassungsdaten des Kraftfahrzeugs 14 wird in einem Verfahrensschritt S5 ein Freigabesignal F empfangen, woraufhin die Zulassungsdaten an einem vorbestimmten Bereich 28 der Plakettenfläche 18 der Plakette 16 angezeigt oder eingeblendet werden. Die Zulassungsdaten können ebenfalls durch die Erfassungseinrichtung 24 erfasst werden. Beispielsweise können die Zulassungsdaten durch eine Kamera der Erfassungseinrichtung 24. Alternativ kann die Steuereinrichtung 26 dazu eingerichtet sein, die Zulassungsdaten zu empfangen.

Die Verfahrensschritte S2 bis S5 können bevorzugt bei einer Band-Ende-Prüfung durchgeführt werden. Die Band-Ende-Prüfung ist notwendig, um eine Betriebssicherheit des Kraftfahrzeugs 14, insbesondere der Erfassungseinrichtung 24 und der Steuereinrichtung 26, zu gewährleisten. Bei der Band-Ende-Prüfung werden die Erfassungseinrichtung 24 und die Steuereinrichtung des Kraftfahrzeugs 14 überprüft. Die Erfassungseinrichtung 24 umfasst eine oder mehrere Lambdasonden, welche die Emissionswerte des Kraftfahrzeugs 14 bestimmen oder messen. Durch die Überprüfung können bei der Band-Ende-Prüfung beriets die kraftfahrzeugseitigen Daten, zumindest die Emissionswerte des Kraftfahrzeugs 14, bestimmt werden und daraus die farbliche Kennzeichnung der Plakette 16 abgeleitet werden. Wird das Kraftfahrzeug 14 am Ende der Band-Ende-Prüfung bereitgestellt, so fehlt lediglich die Anzeige der Zulassungsdaten des Kraftfahrzeugs 14 auf der Plakette 16.

Zum Anzeigen der Zulassungsdaten muss der Besitzer des Kraftfahrzeugs 14 die Zulassungsdaten anfordern, insbesondere wenn das Kraftfahrzeug 14 noch nicht zugelassen ist. Die Zulassungsdaten werden nach Empfangen des Freigabesignals F angezeigt. Das Freigabesignal F wird dabei nach Eingabe eines Freigabecodes FC empfangen. Dabei wird das Freigabesignal F von einer Servereinrichtung 30, insbesondere einer fahrzeugexterne Servereinrichtung, auf die Eingabe des Freigabecodes FC hin ausgegeben. Bei der Servereinrichtung 30 handelt es sich bevorzugt um eine Servereinrichtung einer Zulassungsstelle und/oder um eines technischen Überwachungsvereins, wie beispielsweise dem TÜV.

Beispielsweise erhält der Besitzer des Kraftfahrzeugs 14 den Freigabecode FC direkt von der Zulassungsstelle. Hierzu kann der Besitzer des Kraftfahrzeugs 14 den Freigabecode FC abholen oder beispielsweise mithilfe einer Eingabeeinrichtung 32, welche insbesondere eine Benutzerschnittstelle aufweist, von der Servereinrichtung 30 anfragen. Wird der Freigabecode FC beispielsweise von der Servereinrichtung 30 angefragt, so kann der Freigabecode FC von der Servereinrichtung 30 ausgegeben oder bereitgestellt werden. Beispielsweise kann die Servereinrichtung 30 dazu eingerichtet sein, den Freigabecode FC auf ein portables mobiles Endgerät des Benutzers, insbesondere über eine Funkverbindung, oder an die Eingabeeinrichtung 32 des Kraftfahrzeugs 14 zu übertragen. Wird der Freigabecode FC dem Besitzer bereitgestellt, so kann dieser den Freigabecode FC beispielsweise in die Eingabeeinrichtung 32 des Kraftfahrzeugs 14 über die Benutzerschnittstelle eingeben oder eintippen. Daraufhin kann die Steuereinrichtung 26 des Kraftfahrzeugs 14, welche insbesondere mit der Eingabeeinrichtung 32 des Kraftfahrzeugs 14 gekoppelt ist, dazu eingerichtet sein, ein Signal an die Servereinrichtung 30 ausgeben, welche dazu eingerichtet ist, den eingegebenen Freigabecode FC zu überprüfen. Stimmt der Freigabecode FC beispielsweise mit einem der Servereinrichtung 30 hinterlegten Freigabecode, welcher insbesondere dem Kraftfahrzeug 14 zugeordnet ist, überein, so kann die Servereinrichtung 30 das Freigabesignal F ausgegeben. Bei dem "Freigabecode" handelt es sich insbesondere um eine Zahlen- und/oder Buchstabenkombination. Bevorzugt ist der Freigabecode FC temporär begrenzt. Mit anderen Worten kann die Gültigkeit des Freigabecodes FC zeitlich beschränkt sein.

Damit die Zulassungsdaten auf der Plakettenfläche 18 eingeblendet werden, kann der Besitzer des Kraftfahrzeugs 14 zu einer Zulassungsstelle fahren und den Freigabecode FC anfordern. Gibt der Benutzer nun den Freigabecode FC in die Eingabeeinrichtung 32 ein, so wird durch die Servereinrichtung 30 das Freigabesignal F zum Anzeigen der Zulassungsdaten des Kraftfahrzeugs auf dem vorbestimmten Bereich 28 der Plakettenfläche 18 ausgegeben. Der Freigabecode FC und/oder das Freigabesignal F können von der Servereinrichtung 30 an die Steuereinrichtung 26 des Kraftfahrzeugs 14 über eine Funkverbindung, insbesondere eine Mobilfunk-Verbindung und/oder eine WLAN-Verbindung oder eine Bluetooth-Verbindung übermittelt oder übertragen werden. Auch die Anfragemeldung von der Steuereinrichtung 26 kann über die Funkverbindung ausgegeben oder übermittelt werden.

In einem weiteren Verfahrensschritt S6 wird eine Aktualität, also ein aktueller Stand, der kraftfahrzeugseitigen Daten bestimmt. Beispielsweise kann die Steuereinrichtung 26 dazu eingerichtet sein, in vorbestimmten zeitlichen Abständen die kraftfahrzeugseitigen Daten zu überprüfen. Ändern sich die kraftfahrzeugseitigen Daten, so wird die Anzeigeeinrichtung 20 durch die Steuereinrichtung 26 angesteuert. Dadurch kann die Anzeigeeinrichtung 20 durch die Steuereinrichtung 26 aktualisiert werden.

Zum Aktualisieren der Plakette 16 kann die Steuereinrichtung 26 beispielsweise eine Ausgabeeinrichtung 34 des Kraftfahrzeugs 14 ansteuern, welche dazu eingerichtet ist, einen Hinweis auszugeben. Die Änderung der kraftfahrzeugseitigen Daten kann durch die Steuereinrichtung 26 erfasst werden. Wird beispielsweise durch die Steuereinrichtung 26 festgestellt, dass sich die Emissionswerte des Kraftfahrzeugs 14, welchen eine farbliche Kennzeichnung zugeordnet ist, derart ändern, dass sich die farbliche Kennzeichnung ändern würde, so kann die Steuereinrichtung 26 dazu eingerichtet sein, die Ausgabeeinrichtung 34 anzusteuern. Mit anderen Worten kann die Steuereinrichtung 26 dazu eingerichtet sein, die Ausgabeeinrichtung 34 derart anzusteuern, dass mittels der Ausgabeeinrichtung 34 eine Information ausgegeben wird, welche auf eine Änderung der kraftfahrzeugseitigen Daten hinweist. Wird beispielsweise durch die Steuereinrichtung 26 festgestellt, dass sich die Zulassungsdaten, wie beispielsweise das Kennzeichen des Kraftfahrzeugs 14, ändern, so kann die Steuereinrichtung 26 dazu eingerichtet sein, die Ausgabeeinrichtung 34 anzusteuern. Mit anderen Worten kann die Steuereinrichtung 26 die Ausgabeeinrichtung 34 bei einem Kennzeichenwechsel des Kraftfahrzeugs 14 ansteuern. Beispielsweise kann die Ausgabeeinrichtung 34 als eine Multimediaeinrichtung des Kraftfahrzeugs 14, welche beispielsweise einen Bildschirm oder ein Display oder einen Lautsprecher umfasst, ausgebildet sein. Beispielsweise kann mittels des Displays der Ausgabeeinrichtung 34 ein Schriftzug eingeblendet werden. Dieser Schriftzug kann zum Beispiel "Änderung der Zulassungsdaten oder der Emissionswerte" oder "neue Plakette" oder "ungültige Plakette" anzeigen.

Zum Aktualisieren der farblichen Kennzeichnung der Plakette 16 und/oder der Zulassungsdaten kann ein Aktualisierungscode angefordert werden. Beispielsweise kann der Aktualisierungscode von der Steuereinrichtung 26 von der Servereinrichtung 30 angefordert werden. Bevorzugt kann die Steuereinrichtung 26 dazu eingerichtet sein, bei erfasster Änderung der kraftfahrzeugseitigen Daten eine Aktualisierungsmeldung an die Servereinrichtung 30 auszugeben. Die Servereinrichtung 30 kann daraufhin dazu eingerichtet sein, auf die Aktualisierungsmeldung hin den Aktualisierungscode, welcher bevorzugt zeitlich begrenzt ist, auszugeben oder an das Kraftfahrzeug 14 oder die Steuereinrichtung 26 zu übermitteln.

Ferner kann die Anzeigeeinrichtung 20 dazu eingerichtet sein, neben der Plakette 16 noch eine Vignette und/oder ein Parkticket und/oder eine Parkuhr anzuzeigen. Mit anderen Worten kann auf einer Anzeigefläche 36 der Anzeigeeinrichtung 20 zusätzlich zu der Plakette 16 noch eine Vignette und/oder ein Parkticket und/oder eine Parkuhr eingeblendet werden.

Im Folgenden soll auf ein konkretes Ausführungsbeispiel hinsichtlich der Vignette eingegangen werden:
Zum Anzeigen der Vignette kann durch die Erfassungseinrichtung 24, welche beispielsweise einen GPS-Tracker und/oder ein Navigationssystem umfasst, eine aktuelle Position des Kraftfahrzeugs 14 und/oder eine vorbestimmte Fahrroute des Kraftfahrzeugs 14 erfasst werden. In Abhängigkeit von der aktuellen Position des Kraftfahrzeugs 14 und/oder einer vorbestimmten Fahrroute des Kraftfahrzeugs 14 kann ein weiterer Freigabecode zum Anzeigen der Vignette, beispielsweise von der Servereinrichtung 30, angefragt werden. Die Vignette wird angezeigt, sobald der weitere Freigabecode empfangen oder über eine Benutzerschnittstelle der Eingabeeinrichtung 32 eingegeben wird. In Abhängigkeit von der aktuellen Position und/oder der vorbestimmten Fahrroute des Kraftfahrzeugs 14 kann die Steuereinrichtung 26 dazu eingerichtet sein, die Anzeigeeinrichtung 20 zum Anzeigen der Vignette anzusteuern. Hierzu kann der Steuereinrichtung 26, insbesondere einem Speicher der Steuereinrichtung 26, eine oder mehrere Vignetten, welche den entsprechenden Ländern zugeordnet sind, hinterlegt sein. Zum Freischalten der entsprechenden Vignette kann die Steuereinrichtung 26 dazu eingerichtet sein, den weiteren Freigabecode zu erfassen. Befindet sich oder nähert sich, insbesondere im Betrieb des Kraftfahrzeugs 14, das Kraftfahrzeug einem vorbestimmten Streckenabschnitt, auf welchem eine Vignetten-Pflicht besteht, so kann die entsprechende Vignette mittels der Anzeigeeinrichtung 20 angezeigt werden. Hierzu kann der weitere Freigabecode eingegeben werden. Zusätzlich kann es vorgesehen sein, dass der weitere Freigabecode zeitlich begrenzt ist.

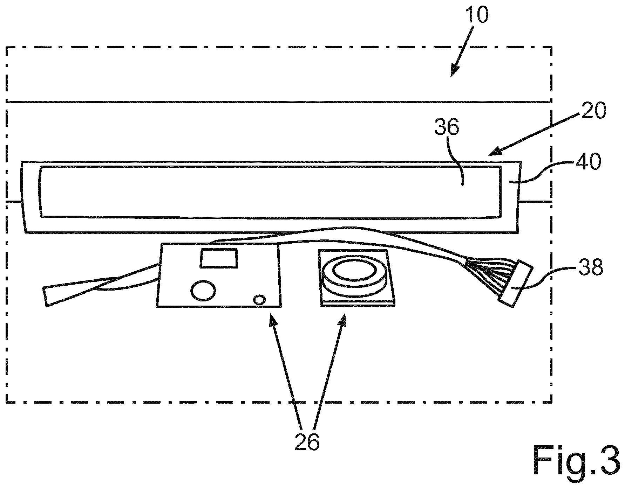

In Fig. 3 sind die technischen Komponenten oder Bestandteile oder Einzelteile des Anzeigesystems 10 gezeigt. Das Anzeigesystem 10 umfasst die Anzeigeeinrichtung 20, welche die Anzeigefläche 36 aufweist. Des Weiteren umfasst das Anzeigesystem 10 die Steuereinrichtung 26, welches insbesondere als Steuergerät, beispielsweise als ECU (engl. electronic control unit), ausgebildet ist. Ferner umfasst das Anzeigesystem 10 ein Verbindungselement 38, welches insbesondere als Kabel mit einem Steckanschluss, ausgebildet ist. Das Verbindungselement 38 ist dazu eingerichtet, die Anzeigeeinrichtung 20 mit der Steuereinrichtung 26, insbesondere elektrisch und/oder signaltechnisch, zu verbinden. Des Weiteren kann das Anzeigesystem 10 ein Heizelement aufweisen, welches beispielsweise als ein Heizdraht ausgebildet ist. Das Heizelement kann in einen Rahmen 40 des Anzeigeelements 36 integriert oder darin aufgenommen sein. Das Heizelement ist dazu eingerichtet, die Anzeigeeinrichtung 20 zu beheizen. Hierzu kann die Erfassungseinrichtung 24, welche beispielsweise ein Thermometer umfasst, ferner dazu eingerichtet ist, eine Umgebungstemperatur, insbesondere in einer Umgebung des Kraftfahrzeugs 14, zu erfassen. Die Steuereinrichtung 26, welche mit der Erfassungseinrichtung 24 gekoppelt ist, kann dazu eingerichtet sein, das Heizelement zum Beheizen der Anzeigeeinrichtung 20 erst anzusteuern, wenn ein erfasster Wert der Umgebungstemperatur unter einen vorbestimmten Schwellwert liegt. Sinken beispielsweise die Umgebungstemperaturen unter den Gefrierpunkt, so kann die Windschutzscheibe 22 gefrieren, wodurch eine Lesbarkeit der Anzeigeeinrichtung 20 behindert wird.

Insgesamt zeigen die Beispiele, wie durch die Erfindung eine Anzeigeeinrichtung in der Frontscheibe integriert werden kann und individuell programmierbar bezüglich einer Farbe und/oder eines Textes und/oder eines Layouts ist.

Bevorzugt erfolgt eine Plausibilisierung der kraftfahrzeugseitigen Daten oder Fahrzeugdaten, insbesondere der Emissionsschlüsselnummer mit den Softwareständen des Antriebsstrangs und einer automatischen Farbkennzeichnung einer, insbesondere werkseitig standardmäßigen, farbneutralen Standardplakette, in einem, in der Frontscheibe integrierten, Anzeigemodul oder einer Anzeigeeinrichtung. Die farbliche Aktivierung und die Festlegung erfolgt im Rahmen der Band-Ende-Prüfung. Zusätzlich oder alternativ kann eine Onlinezuordnung und/oder Freischaltung des dazugehörigen polizeilichen Kennzeichens der kraftfahrzeugseitigen Daten, insbesondere über diverse Stellen, wie beispielsweise eine Zulassungsstelle oder technische Überwachungsvereine, über eine standardisierte Schnittstelle im Diagnosetool des Fahrzeugs, zum Beispiel über eine Schnittstellenangliederung am Motorsteuergerät, erfolgen. Der Datenaustausch kann via WLAN oder Bluetooth basierend auf der Fahrzeugidentifikationsnummer im Zugriffsbereich oder via temporärer Codenummer, insbesondere einem Freigabecode, erfolgen. Auch kann bei einer online Beantragung über die Zusendung der temporären Codenummer diese vom Fahrzeughalter oder Besitzer einmalig händisch in ein Menü des Bordcomputers, also eine Eingabeeinrichtung des Kraftfahrzeugs, eingetragen und dann das polizeiliche Kennzeichen selbstständig aktiviert werden.

Als kraftfahrzeugseitige Daten können insbesondere zum Anzeigen der Plakette eine Fahrzeugidentifikationsnummer und/oder eine Fahrgestellnummer und/oder eine Emissionsschlüsselnummer und/oder eine Motorart, insbesondere Diesel oder Otto oder g-tron oder e-tron oder h-tron, und/oder eine Fahrzeugbauart und/oder eine Erstzulassung und/oder ein aktuelles Tagesdatum erfasst werden. Zusätzlich oder alternativ können die kraftfahrzeugseitigen Daten der Servereinrichtung, insbesondere zum Erhalten des Freigabecodes, übermittelt werden.

## Patentansprüche

1. Verfahren zum Anzeigen von Ausgabedaten (12), wobei die Ausgabedaten (12) kraftfahrzeugseitige Daten eines Kraftfahrzeugs (14) umfassen, welche durch eine Plakette (16) angezeigt werden, wobei die kraftfahrzeugseitigen Daten durch eine farbliche Kennzeichnung der Plakette (16) und Zulassungsdaten des Kraftfahrzeugs (14) repräsentiert werden, umfassend die Schritte:
- Bereitstellen (S1) einer Anzeigeeinrichtung (20) zum Anzeigen der Ausgabedaten (12);
- Erfassen (S2) der kraftfahrzeugseitigen Daten des Kraftfahrzeugs (14) mittels einer Erfassungseinrichtung (24);
- Bestimmen (S3) der farblichen Kennzeichnung der Plakette (16) mittels einer Steuereinrichtung (26) auf Basis der erfassten kraftfahrzeugseitigen Daten;
- Anzeigen (S4) einer Plakettenfläche (18) der Plakette (16) auf einem Anzeigebereich einer Anzeigefläche (36) der Anzeigeeinrichtung (20), wobei die Plakettenfläche (18) die farbliche Kennzeichnung aufweist und
- Empfangen (S5) eines Freigabesignals (F) zum Anzeigen der Zulassungsdaten an einem vorbestimmten Bereich der Plakettenfläche (18) der Plakette (16)
wobei bei einer Änderung der kraftfahrzeugseitigen Daten mittels einer Ausgabeeinrichtung (34) ein Hinweis ausgegeben wird.

2. Verfahren nach Anspruch 1,
**dadurch gekennzeichnet, dass**
die kraftfahrzeugseitigen Daten Emissionswerte des Kraftfahrzeugs (14) umfassen, wobei sich die farbliche Kennzeichnung der Plakette (16) in Abhängigkeit von den erfassten Emissionswerten des Kraftfahrzeugs (14) unterscheidet.

3. Verfahren nach einem der vorhergehenden Ansprüche,
**dadurch gekennzeichnet, dass**
als Zulassungsdaten des Kraftfahrzeugs (14) ein Kraftfahrzeugkennzeichen angezeigt wird.

4. Verfahren nach einem der vorhergehenden Ansprüche,
**dadurch gekennzeichnet, dass**
das Freigabesignal (F) nach Eingabe eines Freigabecodes (FC), welcher insbesondere temporär begrenzt ist, empfangen wird.

5. Verfahren nach einem der vorhergehenden Ansprüche,
**dadurch gekennzeichnet, dass**
die Ausgabedaten ferner zumindest eine Vignette und/oder ein Parkticket und/oder eine Parkuhr umfassen, wobei die Vignette und/oder das Parkticket und/oder die Parkuhr auf einem weiteren Anzeigebereich der Anzeigefläche (36) der Anzeigeeinrichtung (20) angezeigt wird.

6. Verfahren nach Anspruch 5,
**dadurch gekennzeichnet, dass**
eine aktuelle Position und/oder eine vorbestimmte Fahrroute des Kraftfahrzeugs (14) erfasst wird, wobei in Abhängigkeit von der aktuellen Position und/oder der aktuellen Fahrroute des Kraftfahrzeugs (14) ein weiterer Freigabecode zum Anzeigen der Vignette angefragt wird, wobei die Vignette angezeigt wird, sobald der weitere Freigabecode empfangen oder über eine Benutzerschnittstelle eingegeben wird.

7. Verfahren nach einem der vorhergehenden Ansprüche,
**dadurch gekennzeichnet, dass**
das Freigabesignal (F) über eine Funkverbindung, insbesondere über eine Mobilfunk-Verbindung und/oder eine WLAN-Verbindung und/oder eine Bluetooth-Verbindung, übermittelt wird.

8. Anzeigesystem (10) zum Anzeigen von Ausgabedaten (12), wobei die Ausgabedaten (12) kraftfahrzeugseitige Daten eines Kraftfahrzeugs (14) umfassen, welche durch eine Plakette (16) anzeigbar sind, wobei die kraftfahrzeugseitigen Daten durch eine farbliche Kennzeichnung der Plakette (16) und Zulassungsdaten des Kraftfahrzeugs (14) repräsentiert sind, umfassend:
- eine Anzeigeeinrichtung (20), welche dazu eingerichtet ist, die Ausgabedaten (12) anzuzeigen;
- eine Erfassungseinrichtung (24), welche dazu eingerichtet ist, die kraftfahrzeugseitigen Daten des Kraftfahrzeugs (14) zu erfassen;
- eine Steuereinrichtung (26), weiche dazu eingerichtet ist, auf Basis der erfassten kraftfahrzeugseitigen Daten die farbliche Kennzeichnung der Plakette (16) zu bestimmen; wobei
- die Anzeigeeinrichtung (20) ferner dazu eingerichtet ist, eine Plakettehfläche (18) der Plakette (16) auf einem Anzeigebereich einer Anzeigefläche (36) der Anzeigeeinrichtung (20), anzuzeigen, welche die farbliche Kennzeichnung aufweist; wobei
- die Steuereinrichtung (26) ferner dazu eingerichtet ist, ein Freigabesignal zum Anzeigen der Zulassungsdaten an einem vorbestimmten Bereich (28) der Plakettenfläche (18) der Plakette (16) zu empfangen und die Anzeigeeinrichtung (20) zum Anzeigen der Plakette (16), welche die farbliche Kennzeichnung und die Zulassungsdaten aufweist, anzusteuern,
- wobei die Steuereinrichtung weiterhin dazu eingerichtet ist, wenn sie eine Änderung der kraftfahrzeugseitigen Daten erfasst, eine Ausgabeeinrichtung zur Ausgabe eines Hinweises anzusteuern.

9. Anzeigesystem (10) nach Anspruch 8,
**dadurch gekennzeichnet, dass**
die Anzeigeeinrichtung (20) an einem vorbestimmten Bereich einer Windschutzscheibe (22) des Kraftfahrzeugs (14) angeordnet und/oder in ein Grundmaterial der Windschutzscheibe (22) integriert ist.

10. Anzeigesystem (10) nach einem der Ansprüche 8 oder 9,
**dadurch gekennzeichnet, dass**
das Anzeigesystem (10) ein Heizelement umfasst, welches dazu eingerichtet ist, die Anzeigeeinrichtung (20) zu beheizen.

11. Anzeigesystem (10) nach Anspruch 10,
**dadurch gekennzeichnet, dass**
die Erfassungseinrichtung (24) ferner dazu eingerichtet ist, eine Umgebungstemperatur in einer Umgebung des Kraftfahrzeugs (14) zu erfassen, wobei die Steuereinrichtung (26) dazu eingerichtet ist, das Heizelement zum Beheizen der Anzeigeeinrichtung (20) erst anzusteuern, wenn ein erfasster Wert der Umgebungstemperatur unter einen vorbestimmten Schwellwert liegt.

## Claims

1. Method for displaying output data (12), wherein the output data (12) includes motor-vehicle-side data of a motor vehicle (14) that are displayed via a disc (16), wherein the motor-vehicle-side data is represented by a colour coding of the disc (16) and approval data of the motor vehicle (14), said method comprising the following steps:
- providing (S1) a display device (20) for displaying the output data (12);
- detecting (S2) the motor-vehicle-side data of the motor vehicle (14) by means of a detection device (24);
- determining (S3) the colour coding of the disc (16) by means of a control device (26) based on the detected motor-vehicle-side data;
- displaying (S4) a disc surface (18) of the disc (16) in a display region of a display surface (36) of the display device (20); wherein the disc surface (18) has the colour coding; and
- receiving (S5) a release signal (F) for displaying the approval data in a predetermined region of the disc surface (18) of the disc (16);
wherein, when the motor-vehicle-side data changes, a message is output by means of an output device (34).

2. Method according to claim 1,
**characterised in that**
the motor-vehicle-side data comprise emission values of the motor vehicle (14), wherein the colour coding of the disc (16) changes depending on the detected emission values of the motor vehicle (14).

3. Method according to any one of the preceding claims,
**characterised in that**
a motor vehicle identification is displayed as approval data of the motor vehicle (14).

4. Method according to any one of the preceding claims,
**characterised in that**
the release signal (F) is received after entry of a release code (FC) that is, in particular, time-limited.

5. Method according to any one of the preceding claims,
**characterised in that**
the output data further comprise at least one vignette and/or a parking ticket and/or a parking meter, wherein the vignette and/or the parking ticket and/or the parking meter are displayed in a further display region of the display surface (36) of the display device (20).

6. Method according to claim 5,
**characterised in that**
a current position and a predetermined route of the motor vehicle (14) is detected; wherein depending on the current position and/or the current route of the motor vehicle (14), a further release code is requested in order to display the vignette, wherein the vignette is displayed as soon as the further release code is received for entered via a user interface.

7. Method according to any one of the preceding claims,
**characterised in that**
the release signal (F) is transmitted via a radio connection, in particular via a mobile radio connection and/or a WLAN connection and/or a Bluetooth connection.

8. Display system (10) for displaying output data (12), wherein the output data (12) includes motor-vehicle-side data of a motor vehicle (14), which can be displayed via a disc (16), wherein the motor-vehicle-side data are represented by a colour coding of the disc (16) and approval data of the motor vehicle (14), comprising:
- a display device (20), which is configured to display the output data (12);
- a detection device (24), which is configured to detect the motor-vehicle-side data of the motor vehicle (14);
- a control device (26), which is configured to determine the colour coding of the disc (16) on the basis of the detected motor-vehicle-side data; wherein
- the display device (20) is further configured to display a disc surface (18) of the disc (16) in a display region of a display surface (36) of the display device (20), which has the colour coding; wherein
- the control device (26) is further configured to receive a release signal for displaying the approval data in a predetermined region (28) of the disc surface (18) of the disc (16) and to control the display device (20) for displaying the disc (16) which has the colour coding and the approval data,
- wherein the control device is also configured to control an output device for outputting a message if it detects a change in the motor-vehicle-side data.

9. Display system (10) according to claim 8,
**characterised in that**
the display device (20) is arranged in a predetermined region of a windscreen (22) of the motor vehicle (14) and/or is incorporated in a base material of the windscreen (22).

10. Display system (10) according to one of claims 8 or 9,
**characterised in that**
the display system (10) comprises a heating element, which is configured to heat the display device (20).

11. Display system (10) according to claim 10,
**characterised in that**
the detection device (24) is further configured to detect an ambient temperature in an environment of the motor vehicle (14), wherein the control device (26) is configured to control the heating element in order to only heat the display device (20) if a detected value of the ambient temperature is below a predetermined threshold value.

## Revendications

1. Procédé pour l'affichage de données de sortie (12), dans lequel les données de sortie (12) comprennent des données côté véhicule automobile d'un véhicule automobile (14), lesquelles sont affichées par une plaquette (16), dans lequel les données côté véhicule automobile sont représentées par un code couleur de la plaquette (16) et des données d'immatriculation du véhicule automobile (14), comprenant les étapes de :
- mise à disposition (S1) d'un dispositif d'affichage (20) pour l'affichage des données de sortie (12) ;
- détection (S2) des données côté véhicule automobile du véhicule automobile (14) au moyen d'un dispositif de détection (24) ;
- détermination (S3) du code couleur de la plaquette (16) au moyen d'un dispositif de commande (26) sur la base des données côté véhicule automobile détectées ;
- affichage (S4) d'une surface de plaquette (18) de la plaquette (16) sur une zone d'affichage d'une surface d'affichage (36) du dispositif d'affichage (20), dans lequel la surface de plaquette (18) présente le code couleur et
- réception (S5) d'un signal de libération (F) pour l'affichage des données d'immatriculation au niveau d'une zone prédéterminée de la surface de plaquette (18) de la plaquette (16)
dans lequel lors d'une modification des données côté véhicule automobile, une note est éditée au moyen d'un dispositif de sortie (34).

2. Procédé selon la revendication 1,
**caractérisé en ce que**
les données côté véhicule automobile comprennent des valeurs d'émission du véhicule automobile (14), dans lequel le code couleur de la plaquette (16) se distingue en fonction des valeurs d'émission détectées du véhicule automobile (14).

3. Procédé selon l'une quelconque des revendications précédentes,
**caractérisé en ce que**
un identifiant de véhicule automobile est affiché en tant que données d'immatriculation du véhicule automobile (14).

4. Procédé selon l'une quelconque des revendications précédentes,
**caractérisé en ce que**
le signal de libération (F) est reçu après la saisie d'un code de libération (FC), lequel est limité en particulier de manière temporaire.

5. Procédé selon l'une quelconque des revendications précédentes,
**caractérisé en ce que**
les données de sortie comprennent en outre au moins une vignette et/ou un ticket de stationnement et/ou un parcomètre, dans lequel la vignette et/ou le ticket de stationnement et/ou le parcomètre est affiché sur une autre zone d'affichage de la surface d'affichage (36) du dispositif d'affichage (20).

6. Procédé selon la revendication 5,
**caractérisé en ce que**
une position actuelle et/ou un itinéraire prédéterminé du véhicule automobile (14) est détecté, dans lequel un autre code de libération pour l'affichage de la vignette est demandé en fonction de la position actuelle et/ou de l'itinéraire actuel du véhicule automobile (14), dans lequel la vignette est affichée, dès que l'autre code de libération est reçu ou saisi par le biais d'une interface utilisateur.

7. Procédé selon l'une quelconque des revendications précédentes,
**caractérisé en ce que**
le signal de libération (F) est transmis par le biais d'une connexion radio, en particulier par le biais d'une connexion mobile et/ou d'une connexion WiFi et/ou d'une connexion Bluetooth.

8. Système d'affichage (10) pour l'affichage de données de sortie (12), dans lequel les données de sortie (12) comprennent des données côté véhicule automobile d'un véhicule automobile (14), lesquelles peuvent être affichées par une plaquette (16), dans lequel les données côté véhicule automobile sont représentées par un code couleur de la plaquette (16) et des données d'immatriculation du véhicule automobile (14), comprenant :
- un dispositif d'affichage (20), lequel est aménagé pour afficher les données de sortie (12) ;
- un dispositif de détection (24), lequel est aménagé pour détecter les données côté véhicule automobile du véhicule automobile (14) ;
- un dispositif de commande (26), lequel est aménagé pour déterminer sur la base des données côté véhicule automobile détectées le code couleur de la plaquette (16) ; dans lequel
- le dispositif d'affichage (20) est aménagé en outre pour afficher une surface de plaquette (18) de la plaquette (16) sur une zone d'affichage d'une surface d'affichage (36) du dispositif d'affichage (20), laquelle présente le code couleur ; dans lequel
- le dispositif de commande (26) est aménagé en outre pour recevoir un signal de libération pour l'affichage des données d'immatriculation au niveau d'une zone prédéterminée (28) de la surface de plaquette (18) de la plaquette (16) et amorcer le dispositif d'affichage (20) pour l'affichage de la plaquette (16), laquelle présente le code couleur et les données d'immatriculation,
- dans lequel le dispositif de commande est aménagé en outre pour amorcer un dispositif de sortie pour l'édition d'une note lorsqu'il détecte une modification des données côté véhicule automobile.

9. Système d'affichage (10) selon la revendication 8,
**caractérisé en ce que**
le dispositif d'affichage (20) est agencé au niveau d'une zone prédéterminée d'un pare-brise (22) du véhicule automobile (14) et/ou intégré dans un matériau de base du pare-brise (22).

10. Système d'affichage (10) selon l'une quelconque des revendications 8 ou 9,
**caractérisé en ce que**
le système d'affichage (10) comprend un élément chauffant, lequel est aménagé pour chauffer le dispositif d'affichage (20).

11. Système d'affichage (10) selon la revendication 10,
**caractérisé en ce que**
le dispositif de détection (24) est aménagé en outre pour détecter une température ambiante dans un environnement du véhicule automobile (14), dans lequel le dispositif de commande (26) est aménagé pour amorcer l'élément chauffant pour le chauffage du dispositif d'affichage (20) seulement lorsqu'une valeur détectée de la température ambiante est inférieure à une valeur seuil prédéterminée.
